# EUROPÄISCHE PATENTANMELDUNG

(11) **EP 4 657 030 A1**
(43) Veröffentlichungstag der Anmeldung: **03.12.2025**
(21) Anmeldenummer: 25175004.8
(22) Anmeldetag: 08.05.2025
(51) Int. Cl.: G01F 1/34, G01F 15/14, G01L 19/00

(54) **SENSORPOSITIONIERUNG**

(30) Priorität: 27.05.2024 DE 102024114838
(71) Anmelder: ebm-papst Mulfingen GmbH & Co. KG, 74673 Mulfingen (DE)
(72) Erfinder: Fessel, Andreas, 97990 Weikersheim (DE); Hütter, Simon, 74632 Neuenstein (DE)
(74) Vertreter: RavensPAT Patentanwälte Partnerschaft mbB

(57) **Zusammenfassung**

Sensormodul 1 zur Differenzdruckmessung in lufttechnischen Systemen, insbesondere Ventilatoren, mittels Druckbestimmung, Massenstrombestimmung oder Volumenstrombestimmung, umfassend: eine Verarbeitungseinheit 2, mindestens einen Drucksensor 3, wobei der Drucksensor 3 derart ausgebildet ist, sodass er ein, einem örtlichen Druck 4 oder Volumenstrom 4 oder Massenstrom 4, entsprechendes Signal an die Verarbeitungseinheit 2 liefert, wobei die Verarbeitungseinheit 2 wenigstens eine Schnittstelle 5 umfasst oder als Schnittstelle 5 ausgebildet ist.

## Beschreibung

Die vorliegende Erfindung betrifft das technische Gebiet der Sensorik für Differenzdruckmessungen zur Druckbestimmung oder Massenstrombestimmung oder Volumenstrombestimmung oder Druckregelung oder Massenstromregelung oder Volumenstromregelung in lufttechnischen Systemen mithilfe von Ventilatoren mit integrierter Kommutierungselektronik.

Derartige Vorrichtungen und Verfahren sind bereits bekannt.

Beispielsweise offenbart das Dokument DE 10 2020 213 419 A1 einen Ventilator zum Bestimmen eines durch den Ventilator bewegten Medienstroms, umfassend einen Elektromotor und ein durch den Elektromotor angetriebenes Laufrad, wobei das Laufrad ein gasförmiges Medium in einem Medienstrom von einer Zuströmseite zu einer Abströmseite bewegt, wobei der Medienstrom auf der Zuströmseite von einem Zuströmraum über eine Einströmdüse zum Laufrad gelangt. Hierbei ist ein Drucksensorsystem, ein Drehzahlermittlungssystem und eine Auswerteeinheit vorgesehen, wobei das Drucksensorsystem dazu ausgebildet ist, einen Ist-Wirkdruck der Einströmdüse zu ermitteln, wobei das Drehzahlermittlungssystem dazu ausgebildet ist, eine Ist-Drehzahl des Laufrads zu ermitteln, und wobei die Auswerteeinheit dazu ausgebildet ist, basierend auf dem Ist-Wirkdruck, der Ist-Drehzahl und mindestens einer von dem Ventilator abhängigen Kalibriergröße einen Massenstrom und/oder einen Fördervolumenstrom des Mediums zu bestimmen.

Darüber hinaus offenbart das Dokument US 11 754 083 B2 einen Lüfter oder Ventilator, bestehend aus: einem Motor, wobei der Motor umfasst: eine Steuereinheit mit integrierter Motorelektronik; mindestens eine Sensoreinheit zur Druckregelung oder Volumenstromregelung mindestens einen Innendruckschlauch innerhalb des Motors; und einen Durchgang, wobei die mindestens eine Sensoreinheit modular aufgebaut ist. Die mindestens eine Sensoreinheit ist hierbei so konfiguriert, dass sie in oder auf eine Leiterplatte der integrierten Motorelektronik gesteckt werden kann, so dass die mindestens eine Sensoreinheit in Kontakt mit der Leiterplatte der integrierten Motorelektronik ist. Die mindestens eine Sensoreinheit enthält hierbei einen Drucksensor, wobei der Drucksensor so konfiguriert ist, dass er Folgendes bestimmt:
(i) einen lokalen Druck über den mindestens einen internen Druckschlauch oder den mindestens einen externen Druckschlauch außerhalb des Motors; oder
(ii) eine Druckdifferenz zwischen einem Druck an einer ersten Stelle in dem mindestens einen internen Druckschlauch oder dem mindestens einen externen Druckschlauch und einem Druck an einer zweiten Stelle in dem mindestens einen internen Druckschlauch oder dem mindestens einen externen Druckschlauch.

Weiterhin ist der Drucksensor des Dokuments US 11 754 083 B2 so konfiguriert, dass er ein dem örtlichen Druck oder der Druckdifferenz entsprechendes Signal an eine Verarbeitungseinheit liefert, wobei sich mindestens ein Innendruckschlauch von der mindestens einen Sensoreinheit zu dem Durchgang und von dem Durchgang zu mindestens einem Anschluss für den mindestens einen Außendruckschlauch erstreckt.

Zusammengefasst ist es bislang üblich die Drucksensorik unmittelbar auf die Leiterplatte der integrierten Kommutierungselektronik zu bestücken oder in Form eines Sensormoduls auf diese Leiterplatte aufzustecken. Außerdem ist im Stand der Technik die Anbindung eines Sensormoduls an eine entsprechende Messstelle in der Regel mittels Druckschläuchen gelöst.

Nachteilig ist hierbei jedoch, dass der erforderliche Aufwand für die Anbringung von Drückschläuchen an Druckstutzen eines sich auf einer Leiterplatte sich befindlichen Drucksensors bzw. aufgesteckten Sensormoduls und deren Durchleitung vom Motorinneren nach außen erheblich ist. Druckschläuche können Knicken, sich lösen, oder Schwierigkeiten bei der Installation bieten. Beispielsweise müssen bei der Verwendung von Miniatur-Differenzdrucksensoren die Druckschläuche an Stutzen mit beispielsweise 2 mm Durchmesser sicher montiert werden und an einem Verbindungsstück zur Durchleitung an die Anschlussstutzen angebracht werden, was erhebliche Aufwendungen mit sich bringt.

Die technische Aufgabe der Erfindung ist es daher den Stand der Technik zu verbessern und eine Möglichkeit zur vereinfachten Anbringung der Sensorik zu ermöglichen.

Alle in Verbindung mit einzelnen Ausführungsformen der Erfindung erläuterten Merkmale können in unterschiedlicher Kombination in dem erfindungsgemäßen Gegenstand vorgesehen sein, um gleichzeitig deren vorteilhafte Wirkung zu realisieren.

Der Schutzbereich der vorliegenden Erfindung ist durch die Patentansprüche gegeben und wird durch die in der Beschreibung erläuterten oder den Figuren gezeigten Merkmale nicht beschränkt.

Im Sinne der Erfindung ist unter einem Ventilator eine mittels eines Motors angetriebene Strömungsmaschine verstanden, die ein gasförmiges Medium fördert und hierzu ein axial oder radial durchströmtes Laufrad umfasst, das meist in einem Gehäuse rotiert, wobei zwischen Ansaugseite und Druckseite ein Differenzdruck erreicht wird. Zur Regelung eines Ventilators ist die Kenntnis des sich in einem jeweiligen Betriebszustand ergebende Differenzdruck relevant, wofür jeweilig Drücke oder ein Massenstrom oder ein Volumenstrom bestimmt werden.

Im Sinne der Erfindung ist unter einer Kabelverschraubung eine Kabeleinführung, insbesondere der Norm EN 60423, in der Funktionsweise einer Stopfbuchse zu verstehen, die eine besonders gute Dichtung eines Kabels, einer Leitung oder eines isolierten Leiters bei dessen Durchgang durch eine Gehäusewand hat, wobei sie auch andere Funktionen wie z.B. Funktionserdung, Isolation, Knickschutz, Zugentlastung oder eine Kombination von diesen bieten kann.

Weiterhin können im Sinne der Erfindung die Begriffe Druck, Volumenstrom und Massenstrom als äquivalent anzusehen sein, wodurch beispielsweise ein Drucksensor auch als ein Volumenstromsensor oder als Massenstromsensor auszulegen sein kann.

Gemäß einem Aspekt wird die technische Aufgabe der Erfindung gelöst durch ein Sensormodul zur Differenzdruckmessung in lufttechnischen Systemen, insbesondere Ventilatoren, mittels Druckbestimmung, Massenstrombestimmung oder Volumenstrombestimmung, umfassend: eine Verarbeitungseinheit, mindestens einen Drucksensor, wobei der Drucksensor derart ausgebildet ist, sodass er ein dem örtlichen Druck oder Volumenstrom oder Massenstrom entsprechendes Signal an die Verarbeitungseinheit liefert, wobei die Verarbeitungseinheit wenigstens eine Schnittstelle umfasst oder als Schnittstelle ausgebildet ist.

Vorteilhaft ist hierbei, dass eine Anbindung des Sensormoduls an eine Messstelle statt, wie sonst im Stand der Technik üblich beispielsweise mittels Druckschläuchen, durch die Verwendung einer Schnittstelle ersetzt wird und damit die Anbindung vereinfacht wird. Das Sensormodul kann somit räumlich näher an die Messstelle rücken und platzsparend in vorhandenen Gehäusekomponenten wie beispielsweise Klemmkastengehäuse integriert werden.

In einer technisch vorteilhaften Ausführungsform ist vorgesehen, dass die Schnittstelle dazu ausgebildet ist, das Signal des Drucksensors an eine Motorelektronik, insbesondere an eine Motorelektronik eines lufttechnischen Systems, bevorzugt an eine Motorelektronik eines Ventilators, zu übertragen.

Vorteilhaft kann so eine digitale oder analoge Übertragung oder eine elektronische Anbindung zwischen der Schnittstelle und der Motorelektronik erzeugt werden, die weitere Komponente erübrigt. Bauteile und Komponenten können somit eingespart werden und eine kostengünstigere Herstellung kann dadurch ermöglicht werden.

In einer weiteren technisch vorteilhaften Ausführungsform ist vorgesehen, dass die Schnittstelle als eine analoge Schnittstelle, insbesondere als eine 0-10V-Spannungsschnittstelle, oder als eine digitale Schnittstelle, insbesondere als eine digitale Schnittstelle nach dem Industriestandard EIA-485, bevorzugt als eine Inter-Integrated Circuit Schnittstelle, ausgebildet ist.

Vorteilhaft können so bestehende und etablierte Standards eingesetzt werden und eine einfache elektronische Anbindung ermöglicht werden.

Außerdem ist vorgesehen, dass das Sensormodul als ein Einlegeteil einer Kabelverschraubung ausgebildet ist, wobei das Einlegeteil insbesondere mittels einer druckstabilen Hülse, bevorzugt in Kombination mit einer Vergussmasse, ausgebildet ist, wobei die Kabelverschraubung insbesondere zweiteilig ausgebildet ist, wobei die Kabelverschraubung bevorzugt wenigstens ein Verschraubungs-Außenteil, sowie ein Verschraubungs-Innenteil umfasst.

Vorteilhaft kann so eine schnelle und einfache Montage, sowie eine kostengünstige Herstellung ermöglicht werden. Darüber hinaus können zusätzlich bestehende und etablierte Komponenten und Teilestandards vorteilhaft eingesetzt werden.

Darüber hinaus ist in einer technisch vorteilhaften Ausführungsform vorgesehen, dass das Sensormodul mindestens einen ersten Druckmessstutzen und einen zweiten Druckmessstutzen umfasst, wobei insbesondere die Druckmessstutzen mittels einer Durchführung, insbesondere mittels einer Durchführung einer Kabelverschraubung, an einem korrespondierenden ersten Sensorstutzen des Drucksensors und einem korrespondierenden zweiten Sensorstutzen des Drucksensors angeschlossen sind.

Vorteilhaft können so flexiblere und prozesssichere Einbaumöglichkeiten geschaffen, sowie die entsprechenden Messungen optimiert werden.

Weiterhin ist in einer technisch vorteilhaften Ausführungsform vorgesehen, dass das Sensormodul an oder in eine Gehäusewandung, insbesondere an oder in eine Gehäusewandung des Ventilators, insbesondere an oder in eine Gehäusewandung eines Motors des Ventilators, bevorzugt an oder in die Gehäusewandung eines an einem Motor zu befestigenden Klemmkastens, befestigbar, insbesondere verschraubbar, ausgebildet ist.

Vorteilhaft kann so der Einbau und sowie die Installation verbessert werden und bereits vorhandene Komponenten, insbesondere Gehäuse-Komponenten, vorteilhaft hierfür genutzt werden.

Darüber hinaus ist in einer technisch vorteilhaften Ausführungsform vorgesehen, dass der Drucksensor derart ausgebildet ist einen örtlichen Druck oder Volumenstrom oder Massenstrom an mindestens einem ersten Sensorstutzen, insbesondere an einem ersten Druckmessstutzen, oder an mindestens einem zweiten Sensorstutzen insbesondere an einem zweiten Druckmessstutzen, zu detektieren.

Außerdem ist in einer vorteilhaften Ausführungsform vorgesehen, dass der Drucksensor derart ausgebildet ist, eine Druckdifferenz zwischen einem Druck an einem ersten Sensorstutzen, insbesondere einem ersten Druckmessstutzen, und einem Druck an einem zweiten Sensorstutzen, insbesondere an einem zweiten Druckmessstutzen zu detektieren.

Vorteilhaft kann so zusätzlich die Flexibilität beim Einsatz des Sensormoduls verbessert und die Möglichkeiten zur Messung auf entsprechende Anforderungen angepasst werden.

Weiterhin ist in einer technisch vorteilhaften Ausführungsform vorgesehen, dass wenigstens ein erster Sensorstutzen mittels eines ersten Druckschlauchs an einem ersten Druckmessstutzen, insbesondere über eine Durchführung hinweg, und/oder wenigstens ein zweiter Sensorstutzen mittels eines zweiten Druckschlauchs an einem zweiten Druckmessstutzen, insbesondere über eine Durchführung hinweg, angeschlossen ist.

Vorteilhaft kann dies zusätzlich den Einbau und die Installation verbessern und eine kostengünstige Herstellung ermöglichen.

Gemäß eines weiteren Aspekts wird die technische Aufgabe der Erfindung gelöst durch ein lufttechnisches System, insbesondere Ventilator, umfassend einen Motor, ein Motorgehäuse, eine Motorsteuereinheit mit integrierter Motorelektronik, mindestens ein Sensormodul, wobei das Sensormodul ausgebildet ist zur Druckregelung oder Volumenstromregelung oder Massenstromregelung des Motors, wobei der Motor insbesondere eine integrierte Kommutierungselektronik umfasst, wobei das Sensormodul nach einem der vorausgehenden Ansprüche ausgebildet ist.

Vorteilhaft können so die bereits genannten Vorteile in einem lufttechnischen System, wie beispielsweise in einem Ventilator, zum tragen kommen.

Weiterhin ist in einer technisch vorteilhaften Ausführungsform vorgesehen, dass des Sensormodul und/oder die Schnittstelle eine Spannungsversorgung seitens der Motorelektronik empfängt.

Vorteilhaft können zusätzliche Komponenten, wie weitere Versorgungsleitungen oder Versorgungssysteme eingespart und eine einfachere und kostengünstigere Herstellung ermöglicht werden.

Darüber hinaus ist in einer technisch vorteilhaften Ausführungsform vorgesehen, dass die Schnittstelle mittels eines Leiters, insbesondere mittels einer elektrischen Anbindung, mit der Motorelektronik verbunden ist.

Vorteilhaft kann auch dieses zusätzlich die technische Flexibilität erhöhen.

Ausführungsbeispiele der Erfindung sind in den Figuren dargestellt und werden im Folgenden näher beschrieben.

### Es zeigen:

- Fig. 1: eine schematische Ansicht eines Sensormoduls; sowie
- Fig. 2: eine weitere schematische Darstellung des Sensormoduls.

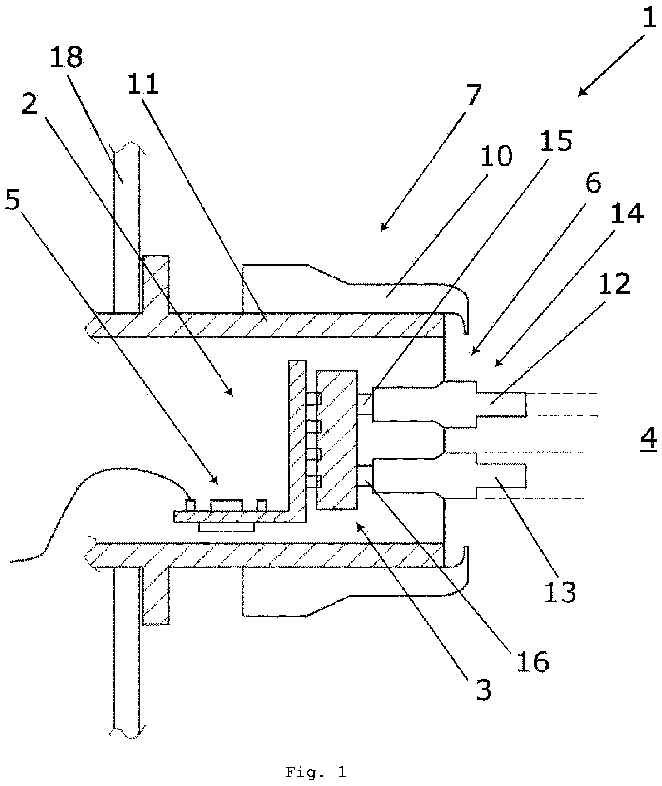

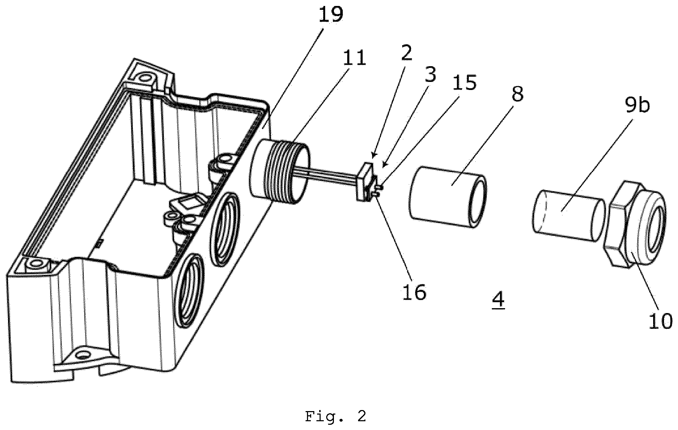

In einer Zusammenschau der Figur 1 und der Figur 2 ist je eine schematische Ansicht eines Sensormoduls 1 zur Differenzdruckmessung in lufttechnischen Systemen, mittels Druckbestimmung, Massenstrombestimmung oder Volumenstrombestimmung, dargestellt. Dieses Sensormodul 1 umfasst: eine Verarbeitungseinheit 2, einen Drucksensor 3, wobei der Drucksensor 3 derart ausgebildet ist, sodass er ein dem örtlichen Druck oder Volumenstrom oder Massenstrom 4 entsprechendes Signal an die Verarbeitungseinheit 2 liefert, wobei die Verarbeitungseinheit 2 wenigstens eine Schnittstelle 5 umfasst oder als Schnittstelle 5 ausgebildet ist.

In einer Zusammenschau der Figur 1 und der Figur 2 ist dargestellt, dass die Anbindung des Sensormoduls 1 an die Messstelle, mittels einer Schnittstelle 5 realisiert ist. Die Schnittstelle 5 ist dazu ausgebildet, das Signal des Drucksensors 3 an eine Motorelektronik, zu übertragen.

Weiterhin ist in einer Zusammenschau der Figur 1 und der Figur 2 das Folgende dargestellt: Das Sensormodul 1 ist hierbei als ein Einlegeteil 6 einer Kabelverschraubung 7 ausgebildet ist, wobei das Einlegeteil 6 mittels einer druckstabilen Hülse 8, in Kombination mit einer Vergussmasse 9, ausgebildet ist.

Die Kabelverschraubung 7 ist zweiteilig ausgebildet und umfasst ein Verschraubungs-Außenteil 10, sowie ein Verschraubungs-Innenteil 11. Hierdurch ist das Sensormodul 1 an einer Gehäusewandung 18 eines beispielsweise an einem Motor zu befestigenden Klemmkastens verschraubbar ausgebildet. Das Sensormodul 1 umfasst hierbei einen ersten Druckmessstutzen 12 und einen zweiten Druckmessstutzen 13, wobei die Druckmessstutzen 12, 13 mittels einer Durchführung 14 einer Kabelverschraubung 7, an einem korrespondierenden ersten Sensorstutzen 15 des Drucksensors 3 und einem korrespondierenden zweiten 16 Sensorstutzen des Drucksensors 3 angeschlossen sind.

Der Drucksensor 3 ist ausgebildet, einen örtlichen Druck 4 oder Volumenstrom 4 oder Massenstrom 4 an dem ersten Sensorstutzen 15 oder dem zweiten Sensorstutzen 16 zu detektieren, oder eine Druckdifferenz zwischen dem Druck 4 an dem ersten Druckmessstutzen 12 und dem Druck 4 an dem zweiten Druckmessstutzen 13, zu detektieren.

Weiterhin ist in den Figuren dargestellt, dass das Sensormodul 1 und/oder die Schnittstelle 5 eine Spannungsversorgung empfängt, die fernab verortet ist und beispielsweise von einer nicht dargestellten Motorelektronik bereitgestellt werden kann. Die Schnittstelle 5 ist hierbei mittels einer elektrischen Anbindung, zur digitalen oder analogen Signalübertragung oder zur elektronischen Anbindung und/oder zur Versorgung, mit der Motorelektronik verbunden sein.

Vorteilhaft kann hierdurch die Installation vereinfacht und verbessert werden. Das Sensormodul 1 rückt dadurch räumlich näher an die Messstelle des örtlichen Drucks 4 oder des Volumenstroms 4 oder des Massenstroms 4 und kann platzsparend in vorhandenen Gehäusekomponenten wie beispielsweise Klemmkastengehäuse oder in eine Gehäusewandung 18 integriert werden.

### Bezugszeichenliste

- 1: Sensormodul
- 2: Verarbeitungseinheit
- 3: Drucksensor
- 4: örtlichen Druck oder Volumenstrom oder Massenstrom
- 5: Schnittstelle
- 6: Einlegeteil
- 7: Kabelverschraubung
- 8: druckstabile Hülse
- 9: Vergussmasse
- 10: Verschraubungs-Außenteil
- 11: Verschraubungs-Innenteil
- 12: erster Druckmessstutzen
- 13: zweiter Druckmessstutzen
- 14: Durchführung
- 15: ersten Sensorstutzen
- 16: zweiten Sensorstutzen
- 18: Gehäusewandung
- 19: Klemmkastens

## Patentansprüche

1. Sensormodul (1) zur Differenzdruckmessung in lufttechnischen Systemen,
insbesondere Ventilatoren,
mittels Druckbestimmung, Massenstrombestimmung oder Volumenstrombestimmung,
umfassend:
eine Verarbeitungseinheit (2),
mindestens einen Drucksensor (3),
wobei der Drucksensor (3) derart ausgebildet ist, sodass er ein, einem örtlichen Druck oder Volumenstrom oder Massenstrom, entsprechendes Signal an die Verarbeitungseinheit (2) liefert,
wobei die Verarbeitungseinheit (2) wenigstens eine Schnittstelle (5) umfasst oder als Schnittstelle (5) ausgebildet ist
**dadurch gekennzeichnet, dass**
das Sensormodul (1) als ein Einlegeteil (6) einer Kabelverschraubung (7) ausgebildet ist,
wobei das Einlegeteil (6) mittels einer druckstabilen Hülse (8),
in Kombination mit einer Vergussmasse (9), ausgebildet ist,
wobei die Kabelverschraubung (7) wenigstens ein Verschraubungs-Außenteil (10), sowie ein Verschraubungs-Innenteil (11) umfasst.

2. Sensormodul (1) nach Anspruch 1,
**dadurch gekennzeichnet, dass**
die Schnittstelle (5) dazu ausgebildet ist, das Signal des Drucksensors (3) an eine Motorelektronik,
insbesondere an eine Motorelektronik eines lufttechnischen Systems,
bevorzugt an eine Motorelektronik eines Ventilators,
zu übertragen.

3. Sensormodul (1) nach einem der vorangehenden Ansprüche,
**dadurch gekennzeichnet, dass**
die Schnittstelle (5) als eine analoge Schnittstelle,
insbesondere als eine 0-10V-Spannungsschnittstelle, oder als eine digitale Schnittstelle,
insbesondere als eine digitale Schnittstelle nach dem Industriestandard EIA-485,
bevorzugt als eine Inter-Integrated Circuit Schnittstelle,
ausgebildet ist.

4. Sensormodul (1) nach einem der vorangehenden Ansprüche,
**dadurch gekennzeichnet, dass** die Kabelverschraubung zweiteilig ausgebildet ist.

5. Sensormodul (1) nach einem der vorangehenden Ansprüche,
**dadurch gekennzeichnet, dass**
das Sensormodul (1) mindestens einen ersten Druckmessstutzen (12) und einen zweiten Druckmessstutzen (13) umfasst,
wobei insbesondere die Druckmessstutzen (12, 13) mittels einer Durchführung (14),
insbesondere mittels einer Durchführung (14) einer Kabelverschraubung (7),
an einem korrespondierenden ersten Sensorstutzen (15) des Drucksensors (3) und einem korrespondierenden zweiten Sensorstutzen (16) des Drucksensors (3) angeschlossen sind.

6. Sensormodul (1) nach einem der vorangehenden Ansprüche,
**dadurch gekennzeichnet, dass**
das Sensormodul (1) an oder in eine Gehäusewandung (18),
insbesondere an oder in eine Gehäusewandung (18) des Ventilators,
insbesondere an oder in eine Gehäusewandung (18) eines Motors des Ventilators,
bevorzugt an oder in die Gehäusewandung (18) eines an einem Motor zu befestigenden Klemmkastens (19),
befestigbar,
insbesondere verschraubbar,
ausgebildet ist.

7. Sensormodul (1) nach einem der vorangehenden Ansprüche,
**dadurch gekennzeichnet, dass**
der Drucksensor (3) derart ausgebildet ist, einen örtlichen Druck oder Volumenstrom oder Massenstrom an mindestens einem ersten Sensorstutzen (15),
insbesondere an einem ersten Druckmessstutzen (12), oder an mindestens einem zweiten Sensorstutzen (16)
insbesondere an einem zweiten Druckmessstutzen (13), zu detektieren.

8. Sensormodul (1) nach einem der vorangehenden Ansprüche,
**dadurch gekennzeichnet, dass**
der Drucksensor (3) derart ausgebildet ist eine Druckdifferenz zwischen einem örtlichen Druck oder Volumenstrom oder Massenstrom an einem ersten Sensorstutzen (15),
insbesondere einem ersten Druckmessstutzen (12), und einem örtlichen Druck oder Volumenstrom oder Massenstrom an einem zweiten Sensorstutzen (16),
insbesondere an einem zweiten Druckmessstutzen (13), zu detektieren.

9. Sensormodul (1) nach einem der vorangehenden Ansprüche,
**dadurch gekennzeichnet, dass**
wenigstens ein erster Sensorstutzen (15) mittels eines ersten Druckschlauchs an einem ersten Druckmessstutzen (12),
insbesondere über eine Durchführung (14) hinweg, und/oder wenigstens ein zweiter Sensorstutzen (16) mittels eines zweiten Druckschlauchs an einem zweiten Druckmessstutzen (13),
insbesondere über eine Durchführung (14) hinweg, angeschlossen ist.

10. Lufttechnisches System, insbesondere Ventilator,
umfassend einen Motor,
ein Motorgehäuse,
eine Motorsteuereinheit mit integrierter Motorelektronik, mindestens ein Sensormodul (1),
wobei das Sensormodul (1) ausgebildet ist zur Druckregelung oder Volumenstromregelung oder Massenstromregelung des Motors,
wobei der Motor insbesondere eine integrierte Kommutierungselektronik umfasst,
**dadurch gekennzeichnet, dass**
das Sensormodul (1) nach einem der vorausgehenden Ansprüche ausgebildet ist.

11. System nach Anspruch 10,
**dadurch gekennzeichnet, dass**
das Sensormodul (1) und/oder die Schnittstelle (5) eine Spannungsversorgung seitens der Motorelektronik empfängt.

12. System nach Anspruch 11
**dadurch gekennzeichnet, dass**
die Schnittstelle (5) mittels eines Leiters,
insbesondere mittels einer elektrischen Anbindung, mit der Motorelektronik verbunden ist.
